# EUROPEAN PATENT APPLICATION

(11) **EP 4 667 875 A1**
(43) Date of publication of application: **24.12.2025**
(21) Application number: 23922588.1
(22) Date of filing: 13.02.2023
(51) Int. Cl.: G01C 21/34

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: NAKAMOTO, Shogo, Tokyo 113-0021 (JP); OGAWA, Keisuke, Tokyo 113-0021 (JP); MATSUMOTO, Reiji, Kawagoe-shi, Saitama 350-8555 (JP); FUKUSHIMA, Norihiko, Kawagoe-shi, Saitama 350-8555 (JP); HIJIKATA, Makoto, Tokyo 113-0021 (JP)
(74) Representative: Hoffmann Eitle
(86) International application number: PCT/JP2023/004761
(87) International publication number: WO 2024/171247

(57) **Abstract**

An information processing device (100) according to the present disclosure includes: an acquisition unit (131) configured to acquire a history of a moving route in which a first moving object has moved from a departure point to a destination; and an output control unit (134) configured to cause a route searched from among candidate routes from the departure point to the destination to be output as a proposed route for moving by a second moving object different from the first moving object. In addition, the output control unit (134) causes the route searched from among the candidate routes to be output as the proposed route on condition that the route has higher identity with the moving route and an energy consumption amount is smaller than that in a case of moving the moving route by the second moving object.

## Description

### Field

The present disclosure relates to an information processing device, an information processing method, and an information processing program.

### Background

Conventionally, a method of searching for an optimal route using a route cost based on a link cost has been proposed.

### Citation List

### Patent Literature

Patent Literature 1: JP 2013-44546 A

### Summary

### Technical Problem

However, in the conventional technique described above, there is room for improvement in presenting an ecological route that is easily accepted by a user.

For example, in the conventional technique described above, at a time point when a user's self-traveling ends, a route cost based on a link cost between the self-traveling points is calculated, and an optimal route is searched for based on a calculation result. However, in such a method, there is a possibility that a route completely different from the route on which the user self-travels is presented as the optimal route. In such a case, it may be difficult for the user to accept this optimal route as a future self-traveling route.

The present disclosure has been made in view of the above, and proposes an information processing device, an information processing method, and an information processing program capable of presenting an ecological route that is easily accepted by a user.

### Solution to Problem

An information processing device, comprising: an acquisition unit configured to acquire a history of a moving route in which a first moving object has moved from a departure point to a destination; and an output control unit configured to output a route searched from among candidate routes from the departure point to the destination as a proposed route for moving by a second moving object different from the first moving object, wherein the output control unit causes the route searched from among the candidate routes to be output as the proposed route on condition that the route has higher identity with the moving route and an energy consumption amount is smaller than that in a case of moving the moving route by the second moving object.

An information processing method executed by an information processing device, the information processing method comprising: an acquisition step of acquiring a history of a moving route in which a first moving object has moved from a departure point to a destination; and an output control step of outputting a route searched from among candidate routes from the departure point to the destination as a proposed route for moving by a second moving object different from the first moving object, wherein in the output control step, the route searched from among the candidate routes is output as the proposed route on condition that the route has higher identity with the moving route and an energy consumption amount is smaller than that in a case of moving the moving route by the second moving object.

An information processing program executed by an information processing device, the information processing program causing the information processing device to execute: an acquisition procedure of acquiring a history of a moving route in which a first moving object has moved from a departure point to a destination; and an output control procedure of outputting a route searched from among candidate routes from the departure point to the destination as a proposed route for moving by a second moving object different from the first moving object, wherein in the output control procedure, the route searched from among the candidate routes is output as the proposed route on condition that the route has higher identity with the moving route and an energy consumption amount is smaller than that in a case of moving the moving route by the second moving object.

### Brief Description of Drawings

FIG. 1 is a diagram illustrating an example of a system according to an embodiment.
FIG. 2 is a diagram illustrating a configuration example of a server device and an in-vehicle device according to the embodiment.
FIG. 3 is a flowchart illustrating information processing according to the embodiment.
FIG. 4 is a diagram illustrating an example of evaluation value calculation processing according to the embodiment.
FIG. 5 is a diagram illustrating a list of calculation results corresponding to identity evaluation values.
FIG. 6 is a diagram illustrating an example of a comparison screen for comparing a travel route and a proposed route.
FIG. 7 is a diagram illustrating a modification of the information processing according to the embodiment.
FIG. 8 is a hardware configuration diagram illustrating an example of a computer that implements functions of the server device.

### Description of Embodiments

### [Embodiment]

Hereinafter, an embodiment of the present disclosure will be described in detail with reference to the drawings. Note that an information processing device, an information processing method, and an information processing program according to the present disclosure are not limited by the embodiment. In the following embodiment, the same parts are denoted by the same reference numerals, and redundant description will be omitted.

In the following embodiment, a "moving object" will be described as a "vehicle" (automobile) that travels on a road. Accordingly, "movement" is expressed as "traveling". For example, the expression "moving route on which a moving object has moved" is replaced with "travel route on which a vehicle has traveled".

### [1. Introduction]

When proposing a user to switch from a vehicle, that is, a gasoline vehicle (GV) in which an energy source that drives a power source is gasoline stored in a storage tank to a vehicle, that is, an electric vehicle (EV) in which an energy source that drives a power source is electric power stored in a battery, a specific ecological route may be presented as an optimal route suitable for an EV.

In such a case, there is a problem that the user cannot accept the ecological route when the ecological route presented as the optimal route is excessively different in distance, shape, feature, or the like from, for example, a route on which the user usually travels.

As an example, it is assumed that a user, who wants to travel on a commuting route by an EV when switching from a GV to an EV, is proposed to switch to an EV on a basis that there is no problem in commuting even when switching to an EV by using an ecological route in a completely different mode from the commuting route. As described above, when the presented ecological route is completely different from a travel route usually used by the user, it is difficult to determine whether the effect of suppressing the fuel consumption (energy consumption amount) is the effect of switching to the EV or the effect of using the ecological route, and the user's understanding of the ecological route is diminished.

The present disclosure proposes a new technique for solving the above problem. Specifically, in the present disclosure, a route with a smaller energy consumption amount is searched for while maintaining the identity with the travel route of the user (for example, a travel route usually used by the user). As a result, an ecological route that is easily accepted by the user can be proposed.

### [2. System Configuration]

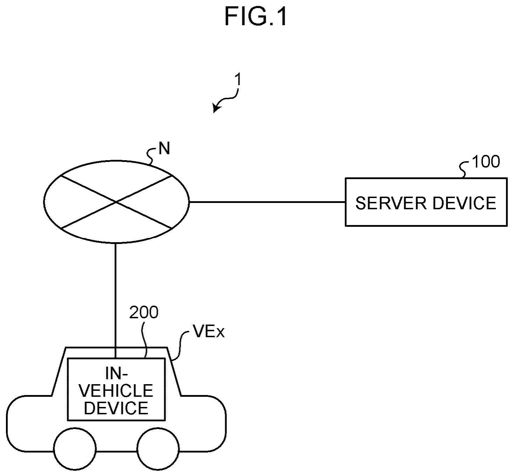

First, a configuration of a system according to an embodiment will be described with reference to FIG. 1. FIG. 1 is a diagram illustrating an example of a system according to the embodiment. FIG. 1 illustrates a system 1 as the example of the system according to the embodiment. Information processing according to the embodiment of the present disclosure (hereinafter, abbreviated as "information processing according to the embodiment") may be implemented in the system 1.

As illustrated in FIG. 1, the system 1 may include a server device 100 and an in-vehicle device 200. In addition, the server device 100 and the in-vehicle device 200 may be coupled to be communicable in a wired or wireless manner via a network N. In addition, the system 1 may include an arbitrary number of server devices 100 and an arbitrary number of in-vehicle devices 200.

### [3. Overview of Each Device Included in System]

### (Regarding Server Device 100)

The server device 100 is an example of an information processing device according to the embodiment, and is a main device that performs information processing according to the embodiment. Specifically, the server device 100 acquires a history of a travel route on which a GV (an example of a first moving object) has traveled from a departure point to a destination, and outputs a route searched from among candidate routes from the departure point to the destination indicated by the travel history as a proposed route for traveling by an EV (an example of a second moving object). More specifically, the server device 100 performs a route search for the candidate routes on condition that the route has higher identity with the travel route by the GV and an energy consumption amount is smaller than that in a case of traveling on this travel route by an EV. Then, the server device 100 outputs the route of the search result as a proposed route for traveling by an EV.

### (Regarding In-Vehicle Device 200)

The in-vehicle device 200 may be a dedicated navigation device built in or loaded on a vehicle VEx. For example, the in-vehicle device 200 may include a navigation device and a recording device (drive recorder). As an example of this, the in-vehicle device 200 may be a complex device in which a navigation device and a recording device independent from each other are communicably coupled. As another example, the in-vehicle device 200 may be one device having a navigation function and a recording function.

Further, the in-vehicle device 200 may include various sensors. For example, the in-vehicle device 200 may include various sensors such as a camera, an acceleration sensor, a gyro sensor, a global positioning system (GPS) sensor, and an atmospheric pressure sensor. For this reason, the in-vehicle device 200 may also have a function of performing interaction and information provision for supporting driving based on sensor information acquired by various sensors.

Further, the in-vehicle device 200 can use not only a sensor included in the own device but also sensor information detected by a sensor included in the vehicle VE itself as a safe traveling system.

In addition, the user can operate a portable terminal device (for example, a smartphone, a tablet terminal, a notebook PC, a PDA, or the like) that is used on a daily basis, similarly to the in-vehicle device 200 by introducing predetermined application software into the portable terminal device.

In addition, it is assumed that the vehicle VEx including the in-vehicle device 200 is a GV currently used by the user (for example, a user who is considering switching to an EV). The travel type and brand name of the vehicle VEx are not limited.

### [4. Functional Configuration]

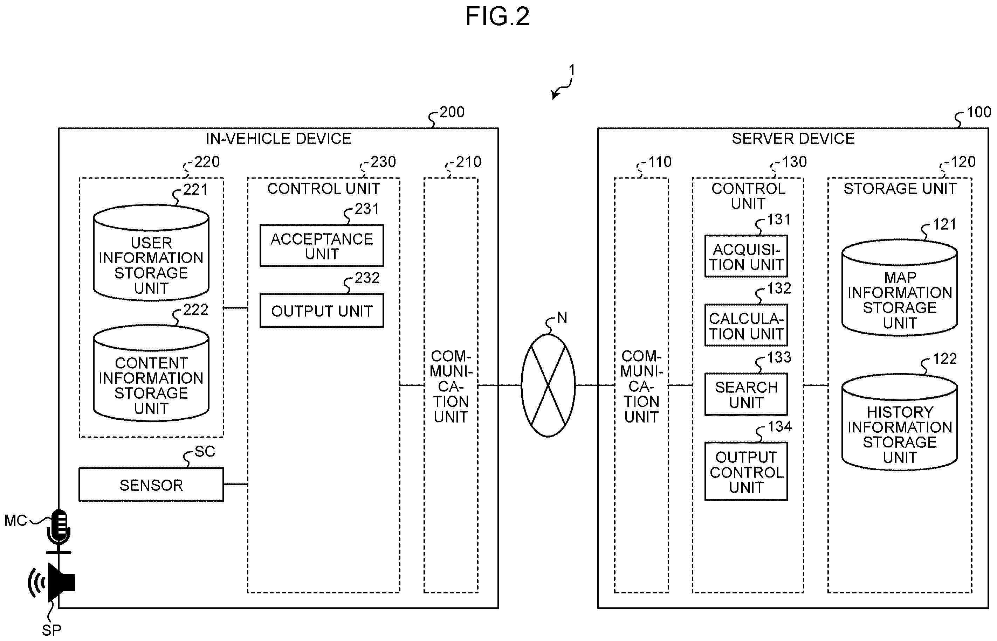

Hereinafter, configuration examples of the server device 100 and the in-vehicle device 200 will be described with reference to FIG. 2. FIG. 2 is a diagram illustrating the configuration examples of the server device 100 and the in-vehicle device 200 according to the embodiment.

### (Server Device 100)

First, a configuration example of the server device 100 will be described. As illustrated in FIG. 2, the server device 100 includes a communication unit 110, a storage unit 120, and a control unit 130.

### (Communication Unit 110)

The communication unit 110 is implemented by, for example, a network interface card (NIC) or the like. Then, the communication unit 110 is coupled to the network N in a wired or wireless manner, and transmits and receives information to and from the in-vehicle device 200, for example.

### (Storage Unit 120)

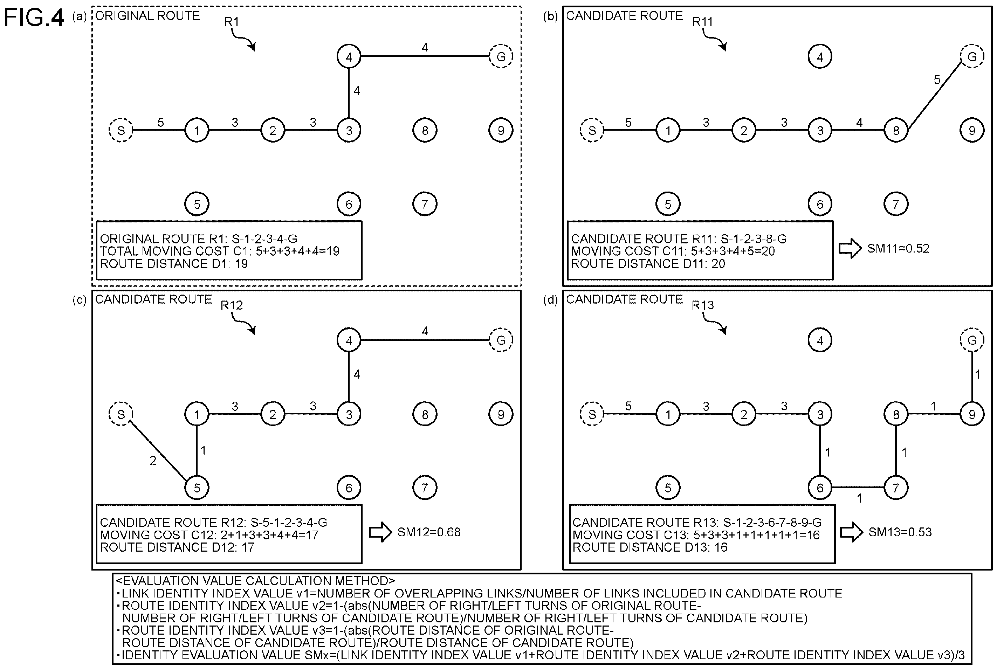

The storage unit 120 is implemented by, for example, a semiconductor memory element such as a random access memory (RAM) or a flash memory, or a storage device such as a hard disk or an optical disk. The storage unit 120 may store, for example, data and programs regarding information processing according to the embodiment. Further, according to the example of FIG. 4, the storage unit 120 may include a map information storage unit 121 and a history information storage unit 122.

### (Map Information Storage Unit 121)

The map information storage unit 121 stores, for example, map data of the whole country. Such map data includes road data representing a road network by a combination of a link and a node.

The link means a section between feature points of the road. The node is a feature point of the road, and examples thereof include an intersection, a bend angle, a dead end, and the like. That is, the link means a road section set based on a predetermined rule. In other words, the link means a unit obtained by dividing a recording section of a movement history based on a predetermined rule. In the map data, the link may be identified by a link ID.

The map data may also include facility days, object information around roads, and the like. The object information includes information of a temporarily existing obstacle in addition to a signboard such as a road sign, a road sign such as a stop line, and a land feature such as a road section line such as a center line or a structure along a road. The obstacle refers to, for example, a factor that hinders passage of a pedestrian or a bicycle, such as a puddle, a depressed portion of a road, a falling object, or a drainage groove (including a portion closed by a net). The object information may include high-accuracy point cloud information of an object used for own vehicle position estimation or the like.

### (History Information Storage Unit 122)

The history information storage unit 122 stores information of a travel history in which the user has traveled by a GV (an example of a first moving object). The history information storage unit 122 stores travel history information for each GV of each user.

### (Regarding Control Unit 130)

The control unit 130 is implemented by a central processing unit (CPU), a micro processing unit (MPU), or the like executing various programs (for example, an information processing program according to the embodiment) stored in a storage device inside the server device 100 using a RAM as a work area. Furthermore, the control unit 130 is implemented by, for example, an integrated circuit such as an application specific integrated circuit (ASIC) or a field programmable gate array (FPGA).

As illustrated in FIG. 2, the control unit 130 includes an acquisition unit 131, a calculation unit 132, a search unit 133, and an output control unit 134, and implements or executes a function and an action of information processing described below. Note that the internal configuration of the control unit 130 is not limited to the configuration illustrated in FIG. 2, and may be another configuration as long as information processing to be described later is performed. Furthermore, a coupling relationship of the processing units of the control unit 130 is not limited to the coupling relationship illustrated in FIG. 2, and may be another coupling relationship.

### (Acquisition Unit 131)

The acquisition unit 131 acquires information of a travel history in which the user has traveled by the vehicle VEx which is a GV (an example of a first moving object). For example, the acquisition unit 131 may acquire travel history information from the in-vehicle device 200 of the vehicle VEx, and store the acquired travel history information in the history information storage unit 122.

When the information processing according to the embodiment is performed, the acquisition unit 131 may acquire travel route information obtained by statistically analyzing the travel history information accumulated in the history information storage unit 122. The travel route information referred to here is, for example, information indicating a travel route used by the user on a daily basis, and may include a commuting route, a travel route within a living area, and the like.

Note that the travel history may be self-reported by the user in a place where a proposal to switch to an EV is made (for example, a place of business at an EV selling store) .

### (Calculation Unit 132)

The calculation unit 132 calculates an energy consumption amount (a consumption amount of electric power stored in a battery) estimated when the user travels on the travel route (a travel route indicated by the travel history acquired by the acquisition unit 131) traveled by the vehicle VEx, by an EV (an example of a second moving object). For example, the calculation unit 132 may calculate the energy consumption amount estimated when the user travels on the travel route by an EV based on an analysis result (for example, an average value of the energy consumption amount) obtained by statistically analyzing an actual value of the energy consumption amount obtained for each link included in the travel route.

When the energy consumption amount is estimated by such a method, for example, the actual value of the energy consumption amount may be associated in advance for each link in the map data stored in the map information storage unit 121.

### (Search Unit 133)

The search unit 133 searches for a candidate route from a departure point to a destination based on the departure point and the destination included in the travel route traveled by the user by the vehicle VEx. For example, the search unit 133 refers to the map data stored in the map information storage unit 121, and searches for an optimal route according to a preset route search condition among routes connecting the departure point and the destination indicated by the travel route as the candidate route. For example, the search unit 133 may search for a plurality of routes matching the route search condition as the candidate routes. For example, the search unit 133 can search using a route calculation method such as Dijkstra's algorithm.

### (Output Control Unit 134)

The output control unit 134 searches for a proposed route for traveling by an EV from among the candidate routes obtained by the search by the search unit 133, and performs control such that the proposed route is output to the user. For example, the output control unit 134 searches for the proposed route from among the candidate routes on condition that the route has higher identity with the travel route and an energy consumption amount is smaller than that in a case of traveling on the travel route by an EV.

For example, the output control unit 134 calculates a moving cost when the user travels from the departure point to the destination included in the candidate route by an EV using at least the energy consumption amount estimated to be consumed for the travel, and searches for the proposed route from among the candidate routes based on the calculated moving cost. Specifically, the output control unit 134 calculates the moving cost for each of links constituting the candidate route, and searches for the proposed route from among the candidate routes based on a total cost obtained by adding the calculated moving costs for each of the links.

More specifically, the output control unit 134 calculates an "identity evaluation value SMx" for evaluating identity of the candidate route with respect to the travel route based on a link identity index value (an example of a first index value) indicating identity between the links constituting the travel route and the links constituting the candidate route and a route identity index value (an example of a second index value) indicating identity between a feature of the travel route and a feature of the candidate route. Then, the output control unit 134 searches for the proposed route from among the candidate routes based on the calculated evaluation value and a total cost corresponding to the candidate route.

For example, the output control unit 134 calculates a "link identity index value v1" based on a ratio of overlapping links, which are links overlapping the links constituting the candidate route, among the links constituting the travel route.

Furthermore, for example, the output control unit 134 calculates the route identity index value based on a degree of difference between moving route feature information indicating the feature of the travel route and candidate route feature information indicating the feature of the candidate route. Here, the travel route feature information may be the number of right/left turns included in the travel route, and the candidate route feature information may be the number of right/left turns included in the candidate route. As another example, the moving route feature information may be a distance of the travel route, and the candidate route feature information may be a distance of the candidate route. In the following embodiment, the route identity index value calculated using the number of right/left turns is referred to as a "route identity index value v2". On the other hand, the route identity index value calculated using the distance is referred to as a "route identity index value v3".

Then, the output control unit 134 searches for a route in which the evaluation value calculated based on the link identity index value and the route identity index value is equal to or more than a predetermined threshold and the total cost corresponding to the candidate route satisfies a predetermined condition from among the candidate routes, and outputs the searched route as a proposed route. The predetermined condition referred to here is that, a cost when the user travels on the travel route by an EV, which the total cost corresponding to the candidate route is lower than the cost calculated using at least the energy consumption amount estimated to be consumed for the travel.

Furthermore, the output control unit 134 may perform output control such that the proposed route is displayed on a predetermined terminal device. For example, in a scene where the user drives the vehicle VEx, the output control unit 134 may control the in-vehicle device 200 so that the proposed route is displayed as an ecological route. As another example, the output control unit 134 may perform control such that a proposed route is displayed as an ecological route on a terminal device used by a sales person in a place where a proposal to switch to an EV is made.

Furthermore, the output control unit 134 may generate a comparison screen on which the travel route (for example, a travel route usually used by the user) traveled by the user by the vehicle VEx is compared with the proposed route as the ecological route, and perform output control such that the generated comparison screen is displayed on the predetermined terminal device.

### (In-Vehicle Device 200)

Next, a configuration example of the in-vehicle device 200 will be described with reference to FIG. 2. As illustrated in FIG. 2, the in-vehicle device 200 includes a microphone MC, a speaker SP, a sensor SC, a communication unit 210, a storage unit 220, and a control unit 230.

### (Microphone MC)

The microphone MC is a sound collecting device that collects sound generated in the vehicle VEx. For example, the microphone MC collects voice produced when a driver D utters.

The speaker SP corresponds to an output device that outputs various types of information by voice. For example, the speaker SP can output various types of information in accordance with output control by the control unit 230. For example, the speaker SP can output guidance content related to navigation and warning, recommended content that proposes a spot (for example, sightseeing spots, stores, and the like), various events, and the like that are considered to be useful for the user, other content related to various news and daily conversation, and the like.

### (Storage Unit 220)

The storage unit 220 is implemented by, for example, a semiconductor memory element such as a RAM or a flash memory, or a storage device such as a hard disk or an optical disk. The storage unit 220 may store, for example, data and programs regarding information processing according to the embodiment. In addition, according to the example of FIG. 2, the storage unit 220 may include a user information storage unit 221 and a content storage unit 222.

### (User Information Storage Unit 221)

The user information storage unit 221 stores various types of information regarding the user related to the vehicle VEx. The user information storage unit 221 may store attribute information of the user related to the vehicle VEx, or may further store the travel history of the vehicle VEx.

### (Content Storage Unit 222)

The content storage unit 222 stores content to be output. The content to be output may be provided by an application (not illustrated) introduced in the in-vehicle device 200.

### (Regarding Control Unit 230)

The control unit 230 is implemented by a CPU, an MPU, or the like executing various programs (for example, an information processing program according to the embodiment) stored in the storage device inside the in-vehicle device 200 using the RAM as a work area. Furthermore, the control unit 230 is implemented by, for example, an integrated circuit such as an ASIC or an FPGA.

As illustrated in FIG. 2, the control unit 230 includes an acceptance unit 231 and an output unit 232, and implements or executes a function and an action of information processing described below. Note that the internal configuration of the control unit 230 is not limited to the configuration illustrated in FIG. 2, and may be another configuration as long as information processing to be described later is performed. Furthermore, the coupling relationship of the processing units of the control unit 230 is not limited to the coupling relationship illustrated in FIG. 2, and may be another coupling relationship.

### (Acceptance Unit 231)

The acceptance unit 231 accepts control information from the output control unit 134 of the server device 100. For example, the acceptance unit 231 may accept control information of contents instructing to output information of a proposed route.

### (Output Unit 232)

The output unit 232 performs control such that predetermined information is output from the speaker SP and a display screen (not illustrated) of the in-vehicle device 200. For example, the output unit 232 controls the speaker SP so that content provided from the application introduced in the in-vehicle device 200 is output by voice. In addition, the output unit 232 performs control such that the information of the proposed route is displayed on the display screen.

### [5. Processing Procedure]

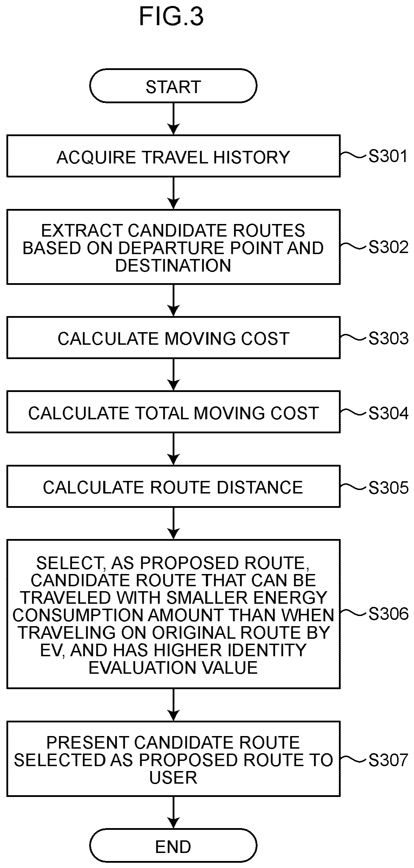

Next, a procedure of information processing according to the embodiment will be described. FIG. 3 is a flowchart illustrating the information processing according to the embodiment. In FIG. 3, an information processing procedure in a scene where a user U1 who owns a vehicle VE1 (an example of the vehicle VEx) receives a proposal to switch to a predetermined EV will be described.

First, the acquisition unit 131 acquires a travel history in which the user U1 has traveled by the vehicle VE1 (GV) (step S301). Here, it is assumed that the acquisition unit 131 acquires information indicating a travel route R1 connecting a departure point S and a destination G as travel history information obtained by the user U1 traveling from the departure point S to the destination G. The travel route R1 is, for example, a commuting route of the user U1, and the acquisition unit 131 may determine the travel route R1 as a commuting route by analyzing the travel history. On the other hand, as a result of the travel route R1 being self-reported as the commuting route by the user U1, the acquisition unit 131 may acquire the information indicating the travel route R1.

Next, the search unit 133 extracts candidate routes from the departure point S to the destination G based on the departure point S and the destination G (step S302). For example, the search unit 133 may refer to the map data stored in the map information storage unit 121 and extract, as the candidate routes, a plurality of routes matching the route search condition among the routes connecting the departure point S and the destination G.

Note that the search unit 133 may also extract the travel route R1 itself as one of the candidate routes, or may extract the travel route R1 as a candidate route, for example, when there is no candidate route that meets the route search condition. Here, it is assumed that the search unit 133 extracts a route R11, a route R12, and a route R13 as the candidate routes. Hereinafter, the travel route R1 is referred to as an "original route R1", and the route R11, the route R12, and the route R13 are referred to as a "candidate route R11", a "candidate route R12", and a "candidate route R13", respectively.

Next, the calculation unit 132 calculates a moving cost, which is a cost required for moving, for each of the original route R1, the candidate route R11, the candidate route R12, and the candidate route R13 (step S303).

Specifically, the calculation unit 132 calculates a moving cost for each of links constituting the original route R1. In addition, the calculation unit 132 calculates the moving cost for each of links constituting the candidate route R11. In addition, the calculation unit 132 similarly calculates the moving cost for each link for the candidate route R12 and the candidate route R13. For example, the calculation unit 132 may calculate, as the moving cost, an energy consumption amount (a consumption amount of electric power stored in the battery) estimated when the user U1 travels on the link by an EV.

As another example, the calculation unit 132 may calculate the moving cost of the link by using not only the energy consumption amount but also at least one of a required time required to travel the link and a link distance. For example, when both the required time and the link distance are used, the calculation unit 132 can calculate a value obtained by multiplying the energy consumption amount, the required time, and the link distance as the moving cost. In addition, the calculation unit 132 may calculate a weighting factor according to the required time and the link distance based on the fact that the energy consumption amount generally increases as the required time and the link distance increase, and calculate a value obtained by correcting the energy consumption amount with the weighting factor as the moving cost.

Next, the calculation unit 132 calculates a total moving cost Cx obtained by adding the moving costs for each of the original route R1, the candidate route R11, the candidate route R12, and the candidate route R13 (step S304). Specifically, the calculation unit 132 calculates a total moving cost C1 by adding moving costs calculated for each of the links constituting the original route R1. In addition, the calculation unit 132 calculates a total moving cost C11 obtained by adding moving costs calculated for each of the links constituting the candidate route R11. In addition, the calculation unit 132 calculates a total moving cost C12 obtained by adding moving costs calculated for each of the links constituting the candidate route R12. In addition, the calculation unit 132 calculates a total moving cost C13 obtained by adding moving costs calculated for each of the links constituting the candidate route R13.

Next, the calculation unit 132 calculates a route distance for each of the original route R1, the candidate route R11, the candidate route R12, and the candidate route R13 (step S305). Specifically, the calculation unit 132 calculates a route distance D1 obtained by adding link distances of the links constituting the original route R1. In addition, the calculation unit 132 calculates a route distance D11 obtained by adding link distances of the links constituting the candidate route R11. In addition, the calculation unit 132 calculates a route distance D12 obtained by adding link distances of the links constituting the candidate route R12. In addition, the calculation unit 132 calculates a route distance D13 obtained by adding link distances of the links constituting the candidate route R13.

The output control unit 134 executes evaluation value calculation processing of calculating the identity evaluation value SMx for evaluating the identity of the candidate route with respect to the travel route (step S306). In the example of FIG. 3, the output control unit 134 calculates an identity evaluation value SM11 for evaluating identity of the candidate route R11 with respect to the original route R1 by the evaluation value calculation processing. In addition, the output control unit 134 calculates an identity evaluation value SM12 for evaluating identity of the candidate route R12 with respect to the original route R1 by the evaluation value calculation processing. In addition, the output control unit 134 calculates an identity evaluation value SM13 for evaluating identity of the candidate route R13 with respect to the original route R1 by the evaluation value calculation processing.

Here, a specific example of the evaluation value calculation processing will be described with reference to FIG. 4. FIG. 4 is a diagram illustrating an example of the evaluation value calculation processing according to the embodiment.

According to the example of FIG. 4(a), the original route R1 includes links connecting a node **"S"** (departure point S), a node **"1"** (relay point), a node **"2"** (relay point), a node **"3"** (relay point), a node **"4"** (relay point), and a node **"G"** (destination G).

According to the example of FIG. 4(a), the calculation unit 132 calculates **"5"** as a moving cost of a link L_S1 between the node **"S"** and the node "1", "3" as a moving cost of a link L_12 between the node **"1"** and the node **"2", "3"** as a moving cost of a link L_23 between the node **"2"** and the node **"3", "4"** as a moving cost of a link L_34 between the node **"3"** and the node **"4",** and **"4"** as a moving cost of a link L_4G between the node **"4"** and the node **"G",** respectively. As a result, the calculation unit 132 calculates **"19"** as the total moving cost C1. In addition, the calculation unit 132 calculates **"19"** as the route distance D1 of the original route R1.

FIG. 4(b) will be described. FIG. 4(b) illustrates the candidate route R11. According to the example of FIG. 4(b), the calculation unit 132 calculates **"5"** as the moving cost of the link L_S1 between the node **"S"** and the node "1", "3" as the moving cost of the link L_12 between the node **"1"** and the node **"2",** "3" as the moving cost of the link L_23 between the node **"2"** and the node **"3",** "4" as a moving cost of a link L_38 between the node **"3"** and a node "8", and "5" as a moving cost of a link L_8G between the node **"8"** and the node **"G",** respectively. As a result, the calculation unit 132 calculates **"20" as** the total moving cost C11. The calculation unit 132 calculates **"20"** as the route distance D11 of the candidate route R11.

FIG. 4(c) will be described. FIG. 4(c) illustrates the candidate route R12. According to the example of FIG. 4(c), the calculation unit 132 calculates "2" as a moving cost of a link L_S5 between the node "S" and a node "5", "1" as a moving cost of a link L_51 between the node "5" and the node "1", "3" as the moving cost of the link L_12 between the node "1" and the node "2", "3" as the moving cost of the link L_23 between the node "2" and the node "3", "4" as the moving cost of the link L_34 between the node "3" and the node "4", and "4" as the moving cost of the link L_4G between the node "4" and the node "G", respectively. As a result, the calculation unit 132 calculates "17" as the total moving cost C12. The calculation unit 132 calculates "17" as the route distance D12 of the candidate route R12.

FIG. 4(d) will be described. FIG. 4(d) illustrates the candidate route R13. According to the example of FIG. 4(d), the calculation unit 132 calculates "5" as the moving cost of the link L_S1 between the node "S" and the node "1", "3" as the moving cost of the link L_12 between the node "1" and the node "2", "3" as the moving cost of the link L_23 between the node "2" and the node "3", "1" as a moving cost of a link L_36 between the node "3" and a node "6", "1" as a moving cost of a link L_67 between the node "6" and a node "7", "1" as a moving cost of a link L_78 between the node "7" and the node "8", "1" as a moving cost of a link L_89 between the node "8" and a node "9", and, "1" as a moving cost of a link L_9G between the node "9" and the node "G", respectively. As a result, the calculation unit 132 calculates "16" as the total moving cost C13. The calculation unit 132 calculates "16" as the route distance D13 of the candidate route R13.

In such a state, the output control unit 134 calculates the link identity index value and the route identity index value according to the evaluation value calculation method illustrated in FIG. 4, and calculates the identity evaluation value SMx from the calculation result. Hereinafter, the evaluation value calculation method will be described by using each example of FIGS. 4(b), 4(c), and 4(d).

First, FIG. 4(b) will be described. When calculating the identity evaluation value SM11 for evaluating the identity of the candidate route R11 with respect to the original route R1, the output control unit 134 calculates the link identity index value v1, the route identity index value v2, and the route identity index value v3.

Specifically, the output control unit 134 calculates the number of overlapping links, which are links overlapping the links constituting the candidate route R11, among the links constituting the original route R1, and calculates a ratio of the number of overlapping links to the number of links included in the candidate route R11 as the link identity index value v1. According to the example of FIG. 4(b), the output control unit 134 obtains "0.60" as the link identity index value v1 by the number of overlapping links "3"/the number of links "5" included in the candidate route R11.

In addition, the output control unit 134 calculates the route identity index value v2 based on the degree of difference between the number of right/left turns of the original route R1 and the number of right/left turns of the candidate route R11. Specifically, the output control unit 134 calculates the route identity index value v2 from a calculation formula "1 - (abs (number of right/left turns of original route - number of right/left turns of candidate route)/number of right/left turns of candidate route)". According to the example of FIG. 4(b), the number of right/left turns of the original route R1 is "2", and the number of right/left turns of the candidate route R11 is "1". Therefore, the output control unit 134 obtains "0" as the route identity index value v2 by "1 - (abs (2 - 1)/1)".

In addition, the output control unit 134 calculates the route identity index value v3 based on the degree of difference between the route distance D1 of the original route R1 and the route distance D11 of the candidate route R11. Specifically, the output control unit 134 calculates the route identity index value v3 from a calculation formula "1 - (abs (route distance of original route - route distance of candidate route)/route distance of candidate route)". According to the example of FIG. 4(b), the route distance D1 of the original route R1 is "19", and the route distance D11 of the candidate route R11 is "20". Therefore, the output control unit 134 obtains "0.95" as the route identity index value v3 by "1 - (abs (19 - 20)/20)".

Then, the output control unit 134 calculates the identity evaluation value SM11 by "(link identity index value v1 + route identity index value v2 + route identity index value v3)/3" which is a calculation formula for averaging the link identity index value v1, the route identity index value v2, and the route identity index value v3. According to the example of FIG. 4(b), the output control unit 134 obtains "0.52" as the identity evaluation value SM11 by "(0.6 + 0 + 0.95)/3".

Next, FIG. 4(c) will be described. When calculating the identity evaluation value SM12 for evaluating the identity of the candidate route R12 with respect to the original route R1, the output control unit 134 calculates the link identity index value v1, the route identity index value v2, and the route identity index value v3.

Specifically, the output control unit 134 calculates the number of overlapping links, which are links overlapping the links constituting the candidate route R12, among the links constituting the original route R1, and calculates a ratio of the number of overlapping links to the number of links included in the candidate route R12 as the link identity index value v1. According to the example of FIG. 4(c), the output control unit 134 obtains "0.67" as the link identity index value v1 by the number of overlapping links "4"/the number of links "6" included in the candidate route R12.

In addition, the output control unit 134 calculates the route identity index value v2 based on the degree of difference between the number of right/left turns of the original route R1 and the number of right/left turns of the candidate route R12. Specifically, the output control unit 134 calculates the route identity index value v2 from a calculation formula "1 - (abs (number of right/left turns of original route - number of right/left turns of candidate route)/number of right/left turns of candidate route)". According to the example of FIG. 4(c), the number of right/left turns of the original route R1 is "2", and the number of right/left turns of the candidate route R12 is "4". Therefore, the output control unit 134 obtains "0.50" as the route identity index value v2 by "1 - (abs (2 - 4)/4)".

In addition, the output control unit 134 calculates the route identity index value v3 based on the degree of difference between the route distance D1 of the original route R1 and the route distance D12 of the candidate route R12. Specifically, the output control unit 134 calculates the route identity index value v3 from a calculation formula "1 - (abs (route distance of original route - route distance of candidate route)/route distance of candidate route)". According to the example of FIG. 4(c), the route distance D1 of the original route R1 is "19", and the route distance D12 of the candidate route R12 is "17". Therefore, the output control unit 134 obtains "0.88" as the route identity index value v3 by "1 - (abs (19 - 17)/17)".

Then, the output control unit 134 calculates the identity evaluation value SM12 by "(link identity index value v1 + route identity index value v2 + route identity index value v3)/3" which is the calculation formula for averaging the link identity index value v1, the route identity index value v2, and the route identity index value v3. According to the example of FIG. 4(c), the output control unit 134 obtains "0.68" as the identity evaluation value SM11 by "(0.67 + 0.50 + 0.88)/3".

Next, FIG. 4(d) will be described. When calculating the identity evaluation value SM13 for evaluating the identity of the candidate route R13 with respect to the original route R1, the output control unit 134 calculates the link identity index value v1, the route identity index value v2, and the route identity index value v3.

Specifically, the output control unit 134 calculates the number of overlapping links, which are links overlapping the links constituting the candidate route R13, among the links constituting the original route R1, and calculates a ratio of the number of overlapping links to the number of links included in the candidate route R13 as the link identity index value v1. According to the example of FIG. 4(d), the output control unit 134 obtains "0.38" as the link identity index value v1 by the number of overlapping links "3"/the number of links "8" included in the candidate route R13.

In addition, the output control unit 134 calculates the route identity index value v2 based on the degree of difference between the number of right/left turns of the original route R1 and the number of right/left turns of the candidate route R13. Specifically, the output control unit 134 calculates the route identity index value v2 from a calculation formula "1 - (abs (number of right/left turns of original route - number of right/left turns of candidate route)/number of right/left turns of candidate route)". According to the example of FIG. 4(d), the number of right/left turns of the original route R1 is "2", and the number of right/left turns of the candidate route R13 is "5". Therefore, the output control unit 134 obtains "0.40" as the route identity index value v2 by "1 - (abs (2 - 5)/5)".

In addition, the output control unit 134 calculates the route identity index value v3 based on the degree of difference between the route distance D1 of the original route R1 and the route distance D13 of the candidate route R13. Specifically, the output control unit 134 calculates the route identity index value v3 from a calculation formula "1 - (abs (route distance of original route - route distance of candidate route)/route distance of candidate route)". According to the example of FIG. 4(d), the route distance D1 of the original route R1 is "19", and the route distance D13 of the candidate route R13 is "16". Therefore, the output control unit 134 obtains "0.81" as the route identity index value v3 by "1 - (abs (19 - 16)/16)".

Then, the output control unit 134 calculates the identity evaluation value SM13 by "(link identity index value v1 + route identity index value v2 + route identity index value v3)/3" which is the calculation formula for averaging the link identity index value v1, the route identity index value v2, and the route identity index value v3. According to the example of FIG. 4(d), the output control unit 134 obtains "0.53" as the identity evaluation value SM11 by "(0.38 + 0.40 + 0.81)/3".

Returning to the description of FIG. 3, the output control unit 134 selects, as a proposed route, a route that can be traveled with less energy consumption amount than when the user travels on the original route R1 by an EV and that has a higher identity evaluation value SMx, among the candidate routes R11, R12, and R13 (step S306).

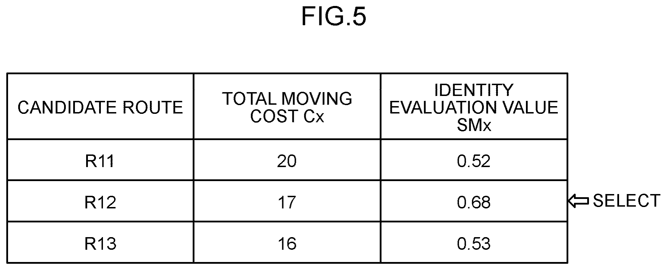

Here, FIG. 5 summarizes the total moving cost Cx and the identity evaluation value SMx calculated for each of the candidate routes R11, R12, and R13. FIG. 5 is a diagram illustrating a list of calculation results corresponding to the identity evaluation values, and corresponds to the example of FIG. 4. According to such an example, the output control unit 134 selects one of the candidate routes R11, R12, and R13 that satisfies the condition that "the user can travel on the original route R1 with less energy consumption amount than when the user travels by an EV, and the identity evaluation value SMx is higher". More specifically, the output control unit 134 selects one that satisfies the condition that "the total moving cost Cx smaller than the total moving cost C1 ("19" in the example of FIG. 4) when the user travels on the original route R1 by the EV is calculated, and the identity evaluation value SMx is equal to or more than the threshold (for example, 0.65)". In this case, as illustrated in FIG. 5, the output control unit 134 can select the candidate route R12 as a candidate route satisfying such a condition.

Finally, the output control unit 134 performs output control such that the candidate route R12 selected as a proposed route is presented to the user U1 (step S307). For example, the output control unit 134 may perform control such that the candidate route R12 is displayed as an ecological route in a place where a proposal to switch to the EV is made (for example, a terminal device used by a sales person).

For example, the output control unit 134 may generate a comparison screen CM in which the original route R1 is compared with the candidate route R12 proposed as the ecological route, and perform output control such that the generated comparison screen CM is displayed on the terminal device.

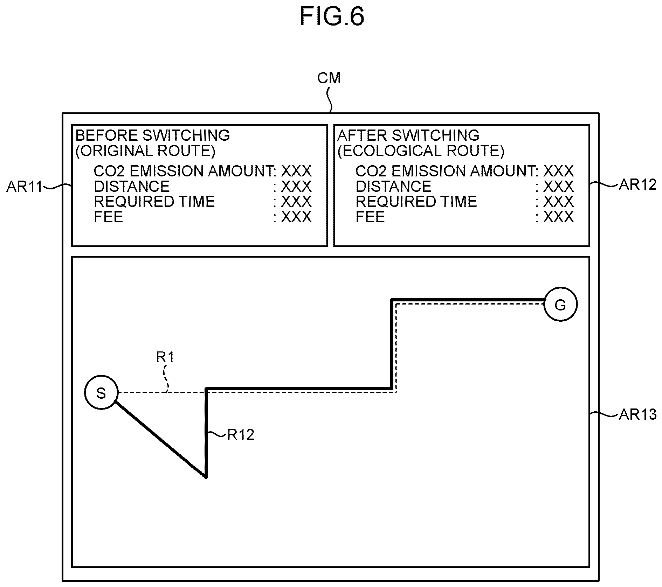

FIG. 6 is a diagram illustrating an example of the comparison screen CM for comparing the travel route and the proposed route. As illustrated in FIG. 6, the comparison screen CM may include an area AR11, an area AR12, and an area AR13. Furthermore, information before switching to the EV may be displayed in the area AR11. The information before switching to the EV is information when the vehicle VE1 travels on the original route R1, and may include a CO2 emission amount when the vehicle VE1 travels on the original route R1, a distance of the original route R1, a required time required to travel the original route R1, a fee required to travel the original route R1, and the like.

On the other hand, information after switching to the EV may be displayed in the area AR12. The information after switching to the EV is information when the user travels on the candidate route R12 by the EV, and may include a CO2 emission amount when the user travels on the candidate route R12 by the EV, a distance of the candidate route R12, a required time required to travel the candidate route R12, a fee required to travel the candidate route R12, and the like.

In addition, in the area AR13, the original route R1 and the candidate route R12 may be displayed in an overlapping manner so that the difference between the original route R1 and the candidate route R12 proposed as the ecological route can be compared.

As a result, the user U1 can grasp that the user U1 arrives at the destination without any problem even when the user U1 travels on the travel route that the user U1 usually uses or the travel route that is almost the same as the travel route that the user U1 usually uses by the EV. Therefore, according to the information processing according to the embodiment, it is possible to propose an ecological route that is easily accepted by the user U1.

### [6. Modifications]

Hereinafter, modifications of the information processing according to the embodiment of the present disclosure will be described. For example, the server device 100 may be implemented in various forms other than the above embodiment.

### [6-1. Modification (1)]

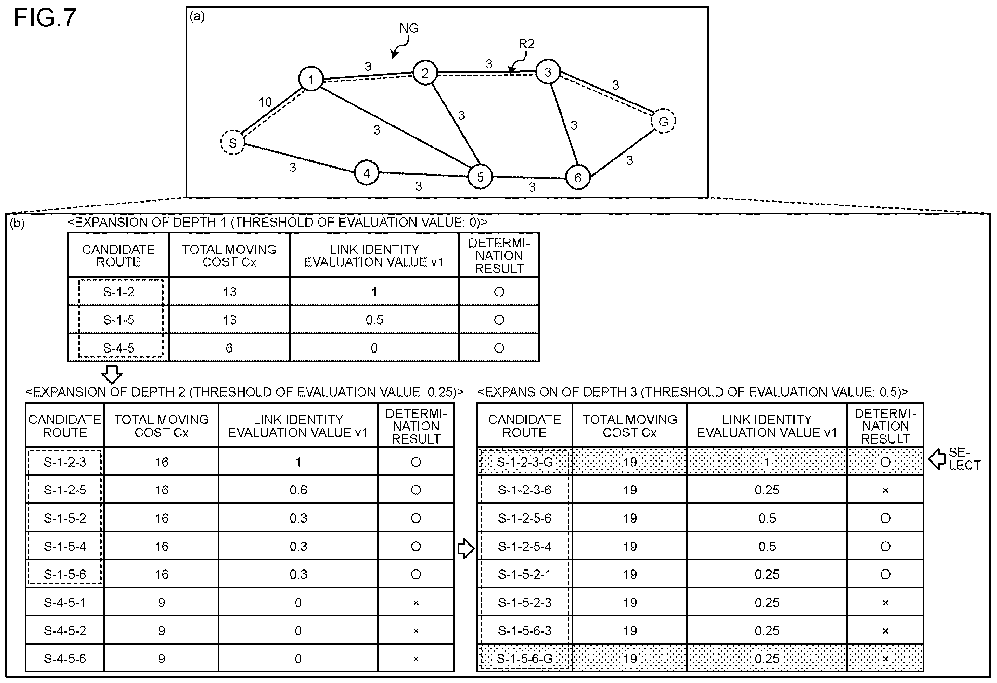

In the above embodiment, an example has been described in which the output control unit 134 calculates the identity evaluation value for each candidate route based on the link identity index value and the route identity index value, and outputs, as a proposed route, a candidate route in which a combination of the calculated identity evaluation value and the cost required for movement satisfies a condition. However, in searching for a candidate route having higher identity with the travel route of the user, in a state where the threshold for the link identity index value v1 is set in advance for each search depth, the output control unit 134 may narrow down an optimal candidate route by branching a candidate route that does not reach a threshold. This point will be described with reference to FIG. 7. FIG. 7 is a diagram illustrating the modification of the information processing according to the embodiment.

FIG. 7(a) illustrates an original route R2 (dotted line) including links connecting a node "S" (departure point S), a node "1" (relay point), a node "2" (relay point), a node "3" (relay point), and a node "G" (destination G). In addition, FIG. 7(a) illustrates a network graph NG (solid line) including links obtained by using the node "S", the node "1", the node "2", the node "3", the node "4", the node "5", the node "6", and the node "G".

Further, the depth referred to here is the number of links tracing the links on the network graph NG starting from the node "S". For example, "depth 1" illustrated in FIG. 7(b) indicates an example in which the number of links to be traced is "2", and "0 or more" is set in advance as a threshold condition for the link identity index value v1. "Depth 2" illustrated in FIG. 7(b) indicates an example in which the number of links to be traced is "3", and "0.25 or more" is set in advance as the threshold condition for the link identity index value v1. "Depth 3" illustrated in FIG. 7(b) indicates an example in which the number of links to be traced is "4", and "0.50 or more" is set in advance as the threshold condition for the link identity index value v1.

In FIG. 7(a), the numerical value associated with each link indicates a moving cost. For example, the calculation unit 132 calculates "10" as a moving cost of a link L_S1 between the node "S" and the node "1", "3" as a moving cost of a link L_12 between the node "1" and the node "2", "3" as a moving cost of a link L_23 between the node "2" and the node "3", and "3" as a moving cost of a link L_3G between the node "3" and the node "G", respectively. Since the other links are also as illustrated in the drawing, description thereof is omitted.

In such a state, the output control unit 134 performs processing of expanding the candidate route to "depth 1". The expanding to "depth 1" means tracing "two" links from the node "S". Therefore, as illustrated in FIG. 7(b), the output control unit 134 can extract a candidate route "S-1-2", a candidate route "S-1-5", and a candidate route "S-1-5" by expanding to "depth 1".

Further, according to FIG. 7(a), the output control unit 134 can calculate "13" as the total moving cost Cx and calculate **"1"** as the link identity index value v1 for the candidate route "S-1-2". Then, in such an example, since the link identity index value v1 is equal to or more than the threshold "0", the output control unit 134 can determine that the threshold condition is satisfied. The candidate route "S-1-5" and a candidate route "S-4-5" are also as illustrated in FIG. 7(b), and thus description thereof is omitted.

Here, the output control unit 134 performs processing of expanding the candidate route to "depth 2" for the candidate routes that satisfy the threshold condition, that is, the candidate route "S-1-2", the candidate route "S-1-5", and the candidate route **"S-1-5".** The expanding to "depth 2" means tracing "three" links from the node "S". Therefore, by expanding to "depth 2", the output control unit 134 can extract a candidate route "S-1-2-3", a candidate route "S-1-2-5", a candidate route "S-1-5-2", a candidate route "S-1-5-4", a candidate route "S-1-5-6", a candidate route "S-4-5-1", a candidate route "S-4-5-2", and a candidate route "S-4-5-6" as illustrated in FIG. 7(b).

Further, according to FIG. 7(a), the output control unit 134 can calculate "16" as the total moving cost Cx and calculate "1" as the link identity index value v1 for the candidate route "S-1-2-3". Then, in such an example, since the link identity index value v1 is equal to or more than the threshold "0.25", the output control unit 134 can determine that the threshold condition is satisfied. The candidate route "S-1-2-5", the candidate route "S-1-5-2", the candidate route "S-1-5-4", the candidate route "S-1-5-6", the candidate route "S-4-5-1", the candidate route "S-4-5-2", and the candidate route "S-4-5-6" are also as illustrated in FIG. 7(b), and thus description thereof is omitted.

Next, the output control unit 134 performs processing of expanding the candidate routes to "depth 3" for the candidate routes that satisfy the threshold condition, that is, the candidate route "S-1-2-3", the candidate route "S-1-2-5", the candidate route "S-1-5-2", the candidate route "S-1-5-4", and the candidate route "S-1-5-6". The other candidate routes that do not satisfy the threshold condition are removed at this point, and no subsequent processing is performed.

The expanding to "depth 2" means tracing "three" links from the node "S". Therefore, by expanding to "depth 3", the output control unit 134 can extract a candidate route "S-1-2-3-G", a candidate route "S-1-2-3-6", a candidate route "S-1-2-5-6", a candidate route "S-1-2-5-4", a candidate route "S-1-5-2-1", a candidate route "S-1-5-2-3", a candidate route "S-1-5-6-3", and a candidate route "S-1-5-6-G" as illustrated in FIG. 7(b).

Further, according to FIG. 7(a), the output control unit 134 can calculate "19" as the total moving cost Cx and calculate "1" as the link identity index value v1 for the candidate route "S-1-2-3-G". Then, in such an example, since the link identity index value v1 is equal to or more than the threshold "0.50", the output control unit 134 can determine that the threshold condition is satisfied. The candidate route "S-1-2-3-6", the candidate route "S-1-2-5-6", the candidate route "S-1-2-5-4", the candidate route "S-1-5-2-1", the candidate route "S-1-5-2-3", the candidate route "S-1-5-6-3", and the candidate route "S-1-5-6-G" are also as illustrated in FIG. 7(b), and thus description thereof is omitted.

Note that the output control unit 134 may extract only "S-1-2-3-G" and the candidate route "S-1-5-6-G" that are candidate routes including the node "S" and the node "G", and determine the threshold condition.

In the example of FIG. 7(b), the candidate route "S-1-2-3-G", the candidate route "S-1-2-5-6", the candidate route "S-1-2-5-4", and the candidate route "S-1-5-2-1" satisfy the threshold condition. However, the candidate route "S-1-2-5-6", the candidate route "S-1-2-5-4", and the candidate route "S-1-5-2-1" do not have the node "G" which is the destination. Therefore, the output control unit 134 selects the candidate route "S-1-2-3-G" having both the node "S" and the node "G" as a proposed route.

Finally, the output control unit 134 performs output control such that the candidate route "S-1-2-3-G" selected as the proposed route is presented to the user U1.

### [6-2. Modification (2)]

In the above embodiment, an example has been described in which the search unit 133 extracts a plurality of routes matching the route search condition as the candidate routes from among the routes connecting the departure point S and the destination G, and performs a route search for the candidate routes. However, the server device 100 may accept the setting of a stop-by point from the user U1. When the user U1 sets the stop-by point, the search unit 133 may extract a candidate route passing through the stop-by point and perform a route search for a candidate route including the stop-by point.

Furthermore, it is assumed that the user U1 considering switching from the GV to the EV sets, for example, a gas station at a specific position as the stop-by point. In such a case, the search unit 133 may search for a charging spot in the vicinity of the specific position (for example, an area having a radius of 500 m). Then, in a case where the charging spot can be found near the specific position, the search unit 133 may extract a candidate route passing through the position of the charging spot.

### [6-3. Modification (3)]

In the above embodiment, a proposal to switch from the GV to the EV has been presented as an application scene of the present disclosure. However, the present disclosure is also applicable to a proposal to switch to a hybrid electric vehicle (HEV), a plug-in hybrid electric vehicle (PHEV), a fuel cell electric vehicle (FCEV), or the like.

### [6-4. Modification (4)]

In the above embodiment, the processing described as being performed by the server device 100 may be performed by the in-vehicle device 200. Specifically, series of processing described as the information processing according to the embodiment of the present disclosure may be performed by the in-vehicle device 200.

### [7. Hardware Configuration]

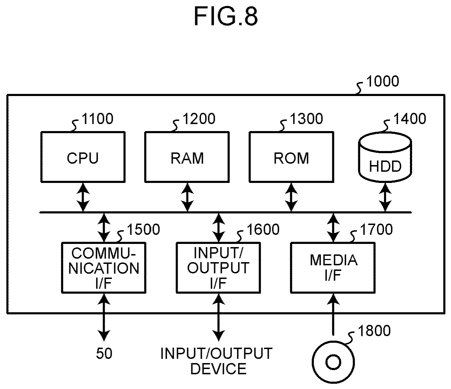

The server device 100 (an example of an information processing device) described above may be implemented by, for example, a computer 1000 having a configuration as illustrated in FIG. 8. FIG. 8 is a hardware configuration diagram illustrating an example of the computer that implements the functions of the server device 100. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates based on a program stored in the ROM 1300 or the HDD 1400, and controls each unit. The ROM 1300 stores a boot program executed by the CPU 1100 when the computer 1000 is activated, a program depending on hardware of the computer 1000, and the like.

The HDD 1400 stores a program executed by the CPU 1100, data used by the program, and the like. The communication interface 1500 receives data from another device via a predetermined communication network, sends the data to the CPU 1100, and transmits data generated by the CPU 1100 to another device via a predetermined communication network.

The CPU 1100 controls an output device such as a display and an input device such as a keyboard via the input/output interface 1600. The CPU 1100 acquires data from the input device via the input/output interface 1600. In addition, the CPU 1100 outputs the generated data to the output device via the input/output interface 1600.

The media interface 1700 reads a program or data stored in the recording medium 1800 and provides the program or data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the server device 100 according to the embodiment, the CPU 1100 of the computer 1000 implements the function of the control unit 130 by executing the program loaded on the RAM 1200. The CPU 1100 of the computer 1000 reads and executes these programs from the recording medium 1800, but as another example, these programs may be acquired from another device via a predetermined communication network.

### [8. Others]

Among the processing described in the above embodiment, all or a part of the processing described as being performed automatically can be performed manually, or all or a part of the processing described as being performed manually can be performed automatically by a known method. In addition, the processing procedure, specific name, and information including various data and parameters illustrated in the document and the drawings can be arbitrarily changed unless otherwise specified. For example, the various types of information illustrated in each drawing are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. For example, a part or all of the processing described as being performed by the server device 100 may be configured to be performed on the in-vehicle device 200 side.

In addition, the above-described embodiment can be appropriately combined within a range in which the processing contents do not contradict each other.

Although some of the embodiment of the present application have been described in detail with reference to the drawings, these are merely examples, and the present invention can be implemented in other forms subjected to various modifications and improvements based on the knowledge of those skilled in the art, including the aspects described in the section of the present invention.

### Reference Signs List

1 SYSTEM
100 SERVER DEVICE
120 STORAGE UNIT
121 MAP INFORMATION STORAGE UNIT
122 HISTORY INFORMATION STORAGE UNIT
130 CONTROL UNIT
131 ACQUISITION UNIT
132 CALCULATION UNIT
133 SEARCH UNIT
134 OUTPUT CONTROL UNIT
200 IN-VEHICLE DEVICE
230 CONTROL UNIT
231 ACCEPTANCE UNIT
232 OUTPUT UNIT

## Claims

1. An information processing device, comprising:
an acquisition unit configured to acquire a history of a moving route in which a first moving object has moved from a departure point to a destination; and
an output control unit configured to output a route searched from among candidate routes from the departure point to the destination as a proposed route for moving by a second moving object different from the first moving object, wherein
the output control unit causes the route searched from among the candidate routes to be output as the proposed route on condition that the route has higher identity with the moving route and an energy consumption amount is smaller than that in a case of moving the moving route by the second moving object.

2. The information processing device according to claim 1, wherein
the output control unit calculates a cost when moving from the departure point to the destination included in the candidate route by the second moving object, by using at least an energy consumption amount estimated to be consumed for the movement, and searches for the proposed route from among the candidate routes based on the calculated cost.

3. The information processing device according to claim 2, wherein
the output control unit calculates the cost for each of links constituting the candidate route, and searches for a route to be output to the second moving object from among the candidate routes based on a total cost obtained by adding the calculated costs for each of the links.

4. The information processing device according to claim 3, wherein
the output control unit calculates an evaluation value for evaluating identity of the candidate route with respect to the moving route based on a first index value indicating identity between links constituting the moving route and the links constituting the candidate route and a second index value indicating identity between a feature of the moving route and a feature of the candidate route, and searches for the proposed route from among the candidate routes based on the calculated evaluation value and the total cost corresponding to the candidate route.

5. The information processing device according to claim 4, wherein
the output control unit calculates the first index value based on a ratio of overlapping links, which are links overlapping with the links constituting the candidate route, among the links constituting the moving route.

6. The information processing device according to claim 4, wherein
the output control unit calculates the second index value based on a degree of difference between moving route feature information indicating the feature of the moving route and candidate route feature information indicating the feature of the candidate route.

7. The information processing device according to claim 6, wherein
the moving route feature information is a number of right/left turns included in the moving route, and
the candidate route feature information is a number of right/left turns included in the candidate route.

8. The information processing device according to claim 6, wherein
the moving route feature information is a distance of the moving route, and
the candidate route feature information is a distance of the candidate route.

9. The information processing device according to claim 4, wherein
the output control unit searches for a route in which the evaluation value is equal to or more than a predetermined threshold and the total cost corresponding to the candidate route satisfies a predetermined condition from among the candidate routes, and outputs the searched route as the proposed route.

10. The information processing device according to claim 9, wherein
the predetermined condition is that the total cost is lower than a cost that is a cost when moving the moving route by the second moving object, the cost being calculated using at least an energy consumption amount estimated to be consumed for the movement.

11. An information processing method executed by an information processing device, the information processing method comprising:
an acquisition step of acquiring a history of a moving route in which a first moving object has moved from a departure point to a destination; and
an output control step of outputting a route searched from among candidate routes from the departure point to the destination as a proposed route for moving by a second moving object different from the first moving object, wherein
in the output control step, the route searched from among the candidate routes is output as the proposed route on condition that the route has higher identity with the moving route and an energy consumption amount is smaller than that in a case of moving the moving route by the second moving object.

12. An information processing program executed by an information processing device, the information processing program causing the information processing device to execute:
an acquisition procedure of acquiring a history of a moving route in which a first moving object has moved from a departure point to a destination; and
an output control procedure of outputting a route searched from among candidate routes from the departure point to the destination as a proposed route for moving by a second moving object different from the first moving object, wherein
in the output control procedure, the route searched from among the candidate routes is output as the proposed route on condition that the route has higher identity with the moving route and an energy consumption amount is smaller than that in a case of moving the moving route by the second moving object.
